# EUROPÄISCHE PATENTSCHRIFT

(11) **EP 3 470 640 B1**
(45) Veröffentlichungstag und Bekanntmachung des Hinweises auf die Patenterteilung: **04.11.2020**
(21) Anmeldenummer: 18195358.9
(22) Anmeldetag: 19.09.2018
(51) Int. Cl.: F01N 3/20, F01N 3/28

(54) **ABGASBEHANDLUNGSBAUGRUPPE**
EXHAUST TREATMENT MODULE
MODULE DE TRAITEMENT DE GAZ D'ÉCHAPPEMENT

(30) Priorität: 16.10.2017 DE 102017124032
(43) Veröffentlichungstag der Anmeldung: 17.04.2019
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: Ruttensperger Lachnit Trossin Gomoll

(56) Entgegenhaltungen:
- EP-A1- 2 813 679
- WO-A1-97/01387
- WO-A1-2013/048309
- WO-A1-2014/107129

## Beschreibung

Die vorliegende Erfindung betrifft eine Abgasbehandlungsbaugruppe für eine Abgasanlage einer Brennkraftmaschine, beispielsweise in einem Fahrzeug.

Zur Minderung des Schadstoffausstoßes, insbesondere des Stickoxidausstoßes, einer Brennkraftmaschine, insbesondere Diesel-Brennkraftmaschine, ist es bekannt, dem von der Brennkraftmaschine ausgestoßenen Abgas ein Reaktionsmittel, beispielsweise eine Harnstoff/Wasser-Lösung, beizumengen, um in einer in einer SCR-(selektive katalytische Reduktion)-Katalysatoranordnung durchgeführten katalytischen Reduktion den schädlichen Stickoxidanteil im Abgas zu senken. Das dem Abgas beigemischte Reaktionsmittel, also beispielsweise die Harnstoff/WasserLösung, wird in einer Mischstrecke stromabwärts einer Reaktionsmittelabgabeanordnung und stromaufwärts der SCR-Katalysatoranordnung zersetzt, so dass für die katalytische Reaktion erforderlicher Ammoniak erzeugt wird. Im Zuge dieser Zersetzung wird der in der Lösung enthaltene Wasseranteil verdampft und in einer thermischen Zersetzung aus dem Harnstoff Ammoniak generiert. Bei dieser thermischen Zersetzung entsteht neben Wasser und Ammoniak auch Isocyansäure, die in einer Hydrolysereaktion katalytisch mit Wasser zu Ammoniak umgesetzt wird.

Um insbesondere auch bei ungünstigen thermischen Bedingungen, also bei vergleichsweise niedrigen Umgebungs- oder Betriebstemperaturen, und bei hohen Dosierraten des Reaktionsmittels eine effiziente Erzeugung von Ammoniak aus dem Reaktionsmittel und eine effiziente Durchmischung des Reaktionsmittels bzw. der daraus generierten Stoffe mit dem von einer Brennkraftmaschine ausgestoßenen Abgas zu gewährleisten, ist es erforderlich, eine ausreichend lange Mischstrecke zwischen dem Ort der Reaktionsmitteleingabe und der SCR-Katalysatoranordnung bereitzustellen. Auch kann zur Unterstützung der Durchmischung in der Mischstrecke ein Mischelement mit einer Mehrzahl von eine Verwirbelung erzeugenden Leitschaufeln vorgesehen sein. Problematisch ist dabei, dass insbesondere in Fahrzeugen der für derartige Abgasanlagen zur Verfügung stehende Bauraum begrenzt ist. Es ist beispielsweise möglich, für eine effiziente Bauraumausnutzung eine derartige Mischstrecke U-förmig zu gestalten, so dass die Mischstrecke zwei nebeneinanderliegende Mischstreckenabschnitte aufweist.

Eine Abgasbehandlungsbaugruppe gemäß dem Oberbegriff des Anspruchs 1 ist aus der WO 2014/107129 A1 bekannt.

Es ist die Aufgabe der vorliegenden Erfindung, eine Abgasbehandlungsbaugruppe bereitzustellen, welche bei kompakter Bauart eine effiziente Durchmischung von Abgas und Reaktionsmittel bzw. aus dem Reaktionsmittel entstehenden Stoffen gewährleistet.

Erfindungsgemäß wird diese Aufgabe gelöst durch eine Abgasbehandlungsbaugruppe für eine Abgasanlage einer Brennkraftmaschine gemäß Anspruch 1. Diese umfasst eine Abgas/Reaktionsmittel-Mischbaugruppe und wenigstens eine SCR-Katalysatoranordnung stromabwärts der Abgas/Reaktionsmittel-Mischbaugruppe und für eine verbesserte Abgasreinigung stromaufwärts der Abgas/Reaktionsmittel-Mischbaugruppe eine Oxidationskatalysatoranordnung oder/und eine Partikelfilteranordnung.

Die Abgas/Reaktionsmittel-Mischbaugruppe umfasst einen Eintrittsbereich eines Abgasströmungskanals und eine Reaktionsmittelabgabeanordnung zum Abgeben von Reaktionsmittel in in dem Abgasströmungskanal strömendes Abgas, wobei der Abgasströmungskanal stromabwärts der Reaktionsmittelabgabeanordnung eine Mischstrecke mit einem ersten Mischstreckenabschnitt umfasst, wobei im ersten Mischstreckenabschnitt ein Abgas/Reaktionsmittel-Gemisch im Wesentlichen in einer ersten Hauptströmungsrichtung in Richtung von der Reaktionsmittelabgabeanordnung zu einem Umlenkbereich strömt, und einen zweiten Mischstreckenabschnitt umfasst, wobei der zweite Mischstreckenabschnitt den ersten Mischstreckenabschnitt im Wesentlichen ringartig umgibt und im zweiten Mischstreckenabschnitt das Abgas/Reaktionsmittel-Gemisch in einer der ersten Hauptströmungsrichtung im Wesentlichen entgegengesetzten zweiten Hauptströmungsrichtung vom Umlenkbereich zu einem Austrittsbereich des Abgasströmungskanals strömt.

Durch die erfindungsgemäße Ineinanderschachtelung zweier Mischstreckenabschnitte und die dadurch generierte im Wesentlichen koaxiale Strömungsanordnung wird einerseits der für die Mischstrecke erforderliche Bauraum begrenzt. Andererseits ermöglicht die koaxiale Strömungsführung mit der den ersten Mischstreckenabschnitt umgebenden Anordnung des zweiten Mischstreckenabschnitts eine deutlich bessere Ausnutzung der im Abgas transportierten Wärme zur Verdampfung bzw. thermischen Zersetzung des Reaktionsmittels bzw. von Bestandteilen desselben.

Für eine hinsichtlich des Wärmeübertrags auf das Reaktionsmittel besonders vorteilhafte Ausgestaltung ist eine in Richtung einer Längsmittenachse langgestreckte und in der ersten Hauptströmungsrichtung sich erstreckende, den ersten Mischstreckenabschnitt bezüglich der ersten Hauptströmungsrichtung nach radial außen begrenzende und diesen vom zweiten Mischstreckenabschnitt trennende rohrartige erste Ringwandung vorgesehen. Die erste Ringwandung wird nicht nur an ihrer Innenseite von dem dort strömenden Abgas erwärmt, sondern wird auch an ihrer Außenseite von dem im zweiten Mischstreckenabschnitt strömenden Abgas erwärmt.

Die erste Ringwandung kann im Wesentlichen in ihrem ganzen Längserstreckungsbereich in Richtung der ersten Hauptströmungsrichtung zylindrisch ausgebildet sein, so dass bei baulich einfacher Ausgestaltung für gleichmäßige Strömungsverhältnisse gesorgt werden kann.

Bei einer alternativen Ausgestaltung kann vorgesehen sein, dass die erste Ringwandung im Wesentlichen in ihrem ganzen Längserstreckungsbereich in Richtung der ersten Hauptströmungsrichtung mit abnehmender Querschnittsabmessung, vorzugsweise im Wesentlichen konisch, ausgebildet ist, vorzugsweise wobei ein Neigungswinkel der ersten Ringwandung bezüglich der ersten Hauptströmungsrichtung im Bereich von 1°-5°, vorzugsweise 1°-3°, liegt. Mit derartiger Ausgestaltung wird einerseits ein verstärktes Auftreffen des im Allgemeinen in Form eines divergierenden Sprühkegels in den Abgasstrom abgegebenen Reaktionsmittels auf die erste Ringwandung gewährleistet. Weiter kann durch den abnehmenden Strömungsquerschnitt einer allmählichen Abkühlung und der damit einhergehenden Abnahme des Volumens bzw. einer Zunahme der Dichte des Abgasstroms Rechnung getragen werden.

Ferner ist eine in der zweiten Hauptströmungsrichtung sich erstreckende, den zweiten Mischstreckenabschnitt bezüglich der zweiten Hauptströmungsrichtung nach radial außen begrenzende zweite Ringwandung vorgesehen.

Die zweite Ringwandung kann für einen einfachen Aufbau im Wesentlichen in ihrem ganzen Längserstreckungsbereich in Richtung der zweiten Hauptströmungsrichtung zylindrisch ausgebildet sein. Insbesondere in Verbindung mit einer Abnahme des Querschnitts der ersten Ringwandung sorgt dies auch im zweiten Mischstreckenabschnitt für einen in Strömungsrichtung abnehmenden Strömungsquerschnitt.

Für den Strömungsübergang vom ersten Mischstreckenabschnitt zum zweiten Mischstreckenabschnitt kann vorgesehen sein, dass der Umlenkbereich ein in seinem Außenumfangsbereich an die zweite Ringwandung anschließendes Umlenkelement umfasst.

Um dabei eine gleichmäßige Strömungsumlenkung und eine Strömungsablösung zu vermeiden, wird vorgeschlagen, dass das Umlenkelement eine bezüglich einer Längsmittenachse vorzugsweise im Wesentlichen rotationssymmetrische, gekrümmte Umlenkfläche aufweist.

Ferner kann die Umlenkung des Abgasstroms im Umlenkbereich dadurch unterstützt werden, dass im Umlenkbereich wenigstens ein im Wesentlichen ringartiges, eine gekrümmte Umlenkfläche bereitstellendes Leitelement vorgesehen ist.

Die Verdampfung bzw. thermischen Zersetzung des Reaktionsmittels kann insbesondere bei niedrigen Abgastemperaturen dadurch unterstützt werden, dass eine vorzugsweise elektrisch erregbare Heizanordnung zur Erwärmung einer den Abgaskanal begrenzenden Wandung, vorzugsweise im Umlenkbereich, vorgesehen ist.

Ferner können Wärmeverluste nach außen bei einer vorteilhaften Ausgestaltung deutlich gemindert werden, wenn eine die Mischstrecke nach außen begrenzende Wandung, vorzugsweise im Umlenkbereich, an einer vom Abgasströmungskanal abgewandten Seite mit Isoliermaterial überdeckt ist.

Um den Strömungsübergang zwischen den beiden Mischstreckenabschnitten gleichmäßiger zu gestalten und eine Strömungsablösung in diesem Bereich, in welchem der Abgasstrom um etwa 180° umgelenkt wird, zu vermeiden, wird vorgeschlagen, dass der erste Mischstreckenabschnitt in seinem dem Umlenkbereich nahen Endbereich bezüglich der ersten Hauptströmungsrichtung radial erweitert ist. Alternativ oder zusätzlich kann vorgesehen sein, dass die erste Ringwandung in ihrem dem Umlenkbereich nahen Endbereich wulstartig erweitert ist.

Für einen kompakten Aufbau einer mit einer erfindungsgemäßen Abgas/Reaktionsmittel-Mischbaugruppe ausgestatteten Abgasanlage wird weiter vorgeschlagen, dass der Eintrittsbereich und der Austrittsbereich des Abgasströmungskanals bezüglich der ersten Hauptströmungsrichtung und der zweiten Hauptströmungsrichtung im Wesentlichen im gleichen axialen Bereich der Mischstrecke angeordnet.

Da im zweiten Streckenabschnitt das Strömungsvolumen sowohl nach radial innen, als auch nach radial außen durch eine Wandung begrenzt ist und somit grundsätzlich in diesem Bereich für das dort strömende Abgas ein größerer Strömungswiderstand vorherrscht, als im ersten Mischstreckenabschnitt, wird weiter vorgeschlagen, dass eine Strömungsquerschnittsfläche im Bereich des zweiten Mischstreckenabschnitts größer oder gleich einer Strömungsquerschnittsfläche im Bereich des ersten Mischstreckenabschnitts ist.

Ferner kann die Durchmischung von Abgas und Reaktionsmittel insbesondere im ersten Mischstreckenabschnitt dadurch unterstützt werden, dass der Eintrittsbereich des Abgasströmungskanals zur Erzeugung einer Drallströmung im ersten Mischstreckenabschnitt ausgebildet ist.

Zur Unterstützung einer kompakten Bauart einer derartigen Abgasbehandlungsanordnung liegen ein Eintrittsbereich der wenigstens einen SCR-Katalysatoranordnung und der Austrittsbereich des Abgasströmungskanals der Abgas/Reaktionsmittel-Mischbaugruppe bezüglich der ersten Hauptströmungsrichtung und der zweiten Hauptströmungsrichtung im gleichen axialen Bereich der Mischstrecke.

Ferner mündet der Austrittsbereich des Abgasströmungskanals in eine das Abgas/Reaktionsmittel-Gemisch vom Austrittsbereich des Abgasströmungskanals bezüglich der zweiten Hauptströmungsrichtung im Wesentlichen nach radial außen zum Eintrittsbereich der wenigstens einen SCR-Katalysatoranordnung leitende Abgabe-Strömungskammer.

Für eine Erhöhung der Effizienz der zur Reinigung des Abgases durchzuführenden selektiven katalytischen Reduktion können die Eintrittsbereiche von wenigstens zwei SCR-Katalysatoranordnungen zur Abgabe-Strömungskammer offen sein.

Eine kompakte Bauart wird dadurch unterstützt, dass ein Austrittsbereich der Oxidationskatalysatoranordnung oder/und der Partikelfilteranordnung zu einer Aufnahme-Strömungskammer offen ist, und dass der Eintrittsbereich des Abgasströmungskanals zu der Aufnahme-Strömungskammer offen ist, vorzugsweise wobei Abgas in der Aufnahme-Strömungskammer bezüglich der ersten Hauptströmungsrichtung nach radial innen strömt, wobei weiter vorgesehen sein kann, dass die Aufnahme-Strömungskammer und die Abgabe-Strömungskammer bezüglich der ersten Hauptströmungsrichtung oder/und der zweiten Hauptströmungsrichtung im gleichen axialen Bereich der Mischstrecke angeordnet sind.

Die vorliegende Erfindung wird nachfolgend mit Bezug auf die beiliegenden Figuren detailliert beschrieben. Es zeigt:
- Fig. 1: eine Abgas/Reaktionsmittel-Mischbaugruppe in prinzipartiger Längsschnittdarstellung;
- Fig. 2: ein Umlenkelement der Abgas/Reaktionsmittel-Mischbaugruppe der Fig. 1 in perspektivischer Ansicht;.
- Fig. 3: in ihren Darstellungen a) und b) verschieden gestaltete Umlenkbereiche der Abgas/Reaktionsmittel-Mischbaugruppe der Fig. 1;
- Fig. 4: in perspektivischer Darstellung eine Abgasbehandlungsbaugruppe mit einer Baugruppe gemäß Fig. 1;
- Fig. 5: eine der Fig. 4 entsprechende Darstellung einer alternativen Ausgestaltungsart;
- Fig. 6: eine der Fig. 1 entsprechende Darstellung einer alternativen Ausgestaltungsart einer Abgas/Reaktionsmittel-Mischbaugruppe;
- Fig. 7: eine weitere der Fig. 1 entsprechende Darstellung einer alternativen Ausgestaltungsart einer Abgas/Reaktionsmittel-Mischbaugruppe;
- Fig. 8: eine weitere der Fig. 1 entsprechende Darstellung einer alternativen Ausgestaltungsart einer Abgas/Reaktionsmittel-Mischbaugruppe.

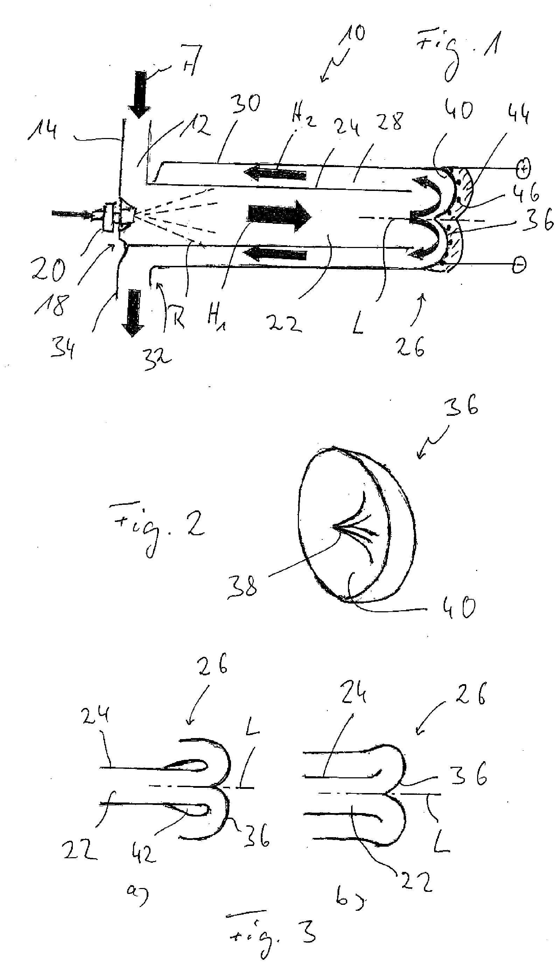

In Fig. 1 ist eine Abgas/Reaktionsmittel-Mischbaugruppe für eine Abgasanlage einer Brennkraftmaschine, beispielsweise in einem Fahrzeug, allgemein mit 10 bezeichnet. Die Abgas/Reaktionsmittel-Mischbaugruppe 10 umfasst einen Abgasströmungskanal 12 mit einem Eintrittsbereich 14. Der Eintrittsbereich 14 des Abgasströmungskanals 12 führt das von einer Brennkraftmaschine ausgestoßene Abgas A in Richtung zu einer allgemein mit 16 bezeichneten Mischstrecke. An einem stromaufwärtigen Endbereich 18 der Mischstrecke 16 ist eine allgemein auch als Injektor bezeichnete Reaktionsmittelabgabeanordnung 20 vorgesehen. Die Reaktionsmittelabgabeanordnung 20 gibt flüssiges Reaktionsmittel R, beispielsweise eine Harnstoff/Wasser-Lösung oder dergleichen, in Form eines Sprühkegels in einen ersten Mischstreckenabschnitt 22 der Mischstrecke 16 ab. Der erste Mischstreckenabschnitt 22 ist im Wesentlichen im Inneren einer ersten Ringwandung 24 gebildet. Die Ringwandung 24 ist im Wesentlichen rohrartig und in Richtung einer Längsmittenachse L langgestreckt ausgebildet und weist in dem in Fig. 1 dargestellten Ausgestaltungsbeispiel eine im Wesentlichen zylindrische Gestalt auf, so dass im Wesentlichen im gesamten Längserstreckungsbereich der ersten Ringwandung 24 der erste Mischstreckenabschnitt 22 mit im Wesentlichen gleicher Querschnittsfläche und -gestalt bereitgestellt ist.

Das vom Eintrittsbereich 14 in den ersten Mischstreckenabschnitt 22 eingeleitete Abgas A wird vorzugsweise derart geführt, dass eine Drallströmung des Abgases A im ersten Mischstreckenabschnitt entsteht, wodurch die Durchmischung von Abgas A und Reaktionsmittel R im ersten Mischstreckenabschnitt 22 unterstützt wird. Die Drallströmung kann beispielsweise dadurch generiert werden, dass das Abgas A aus dem Eintrittsbereich 14 im Wesentlichen radial in den ersten Mischstreckenabschnitt 22 eingeleitet wird, ggf. auch unterstützt durch die Ablenkung in Umfangsrichtung unterstützende Leitelemente im stromaufwärtigen Endbereich 18 der Mischstrecke 16.

Unabhängig davon, ob bzw. in welchem Ausmaß das Abgas A mit Drallströmung in den ersten Mischstreckenabschnitt 22 eingeleitet wird, weist das Abgas A bzw. das dort generierte Gemisch aus Abgas A und Reaktionsmittel R eine erste Hauptströmungsrichtung H₁ im ersten Mischstreckenabschnitt 22 auf. Diese erste Hauptströmungsrichtung H₁ kann also im Wesentlichen derjenigen Richtung entsprechen, in welcher das Abgas A entweder im Wesentlichen linear oder mit einem schraubenartig gewundenen Strömungsweg entlang der ersten Ringwandung 22 in Richtung auf einen Umlenkbereich 26 zu strömt bzw. gefördert wird.

Im Umlenkbereich 26 wird der mit Reaktionsmittel R durchsetzte Abgasstrom um etwa 180° umgelenkt und tritt in einen zweiten Mischstreckenabschnitt 28 ein. Dieser ist nach radial innen durch die erste Ringwandung 24 begrenzt und ist nach radial außen durch eine die erste Ringwandung 24 beispielsweise im Wesentlichen konzentrisch umgebende zweite Ringwandung 30 begrenzt. Der zweite Mischstreckenabschnitt 28 umgibt somit den ersten Mischstreckenabschnitt 22 im Wesentlichen über dessen gesamten Längserstreckungsbereich ringartig, so dass das im zweiten Mischstreckenabschnitt 28 strömende Gemisch aus Abgas A und Reaktionsmittel R im Wesentlichen in einer zweiten Hauptströmungsrichtung H₂ strömt, welche der ersten Hauptströmungsrichtung H₁ im Wesentlichen entgegengerichtet ist. Auch hier ist darauf hinzuweisen, dass die zweite Hauptströmungsrichtung H₂ diejenige Strömungsrichtung anzeigt, in welcher das im zweiten Mischstreckenabschnitt 28 strömende Gemisch aus Abgas A und Reaktionsmittel R vom Umlenkbereich 26 in Richtung zu einem stromabwärtigen Endbereich 32 der Mischstrecke 16 und einem dort von der Mischstrecke 16 wegführenden Austrittsbereich 34 des Abgasströmungskanals 12 strömt bzw. gefördert wird. Auch im zweiten Mischstreckenabschnitt 28 kann der Strom aus Abgas A und Reaktionsmittel R einem beispielsweise schraubenartig gewundenen Strömungsweg um die erste Ringwandung 24 folgen, was daraus resultieren kann, dass der den ersten Mischstreckenabschnitt 22 verlassende Strom eine derartige Strömungsrichtungskomponente in Umfangsrichtung aufweist oder/und dass im zweiten Mischstreckenabschnitt 28 eine derartige Strömungsführung unterstützende Leitelemente vorgesehen sind.

Man erkennt in Fig. 1, dass der Eintrittsbereich 14 und der Austrittsbereich 34 des Abgasströmungskanals 12 bezüglich der beiden Hauptströmungsrichtungen H₁, H₂ bzw. auch der in der Erstreckungsrichtung im Wesentlichen diesen beiden Hauptströmungsrichtungen entsprechenden Längsmittenachse L näherungsweise im gleichen axialen Bereich liegen, nämlich im Bereich des stromaufwärtigen Endbereichs 18 bzw. auch des stromabwärtigen Endbereichs 32 der Mischstrecke 16. Am anderen axialen Endbereich der Mischstrecke 16 ist der Umlenkbereich 26 bereitgestellt, welcher im Wesentlichen durch ein in Fig. 2 dargestelltes und an die zweite Ringwandung 30 angebundenes kappenartiges Umlenkelement 36 bereitgestellt ist. Da im Allgemeinen die Ringwandungen 24, 30 und auch das Umlenkelement 36 aus Gründen der thermischen Stabilität aus Metallmaterial aufgebaut sind, kann das Umlenkelement 36 beispielsweise durch Materialschluss, also Verschweißen oder Verlöten, mit der zweiten Ringwandung 30 verbunden sein, könnte ggf. damit aber auch integral ausgebildet sein.

Das Umlenkelement 36 kann eine zur Längsmittenachse L beispielsweise rotationssymmetrische Gestalt aufweisen und, ausgehend von einem zentralen und in Richtung zum ersten Mischstreckenabschnitt 22 orientierten Erhebungsbereich 38 eine die Längsmittenachse L ringartig umgebende, von radial innen nach radial außen bogenartig gekrümmte Umlenkfläche 40 bereitstellen. Das den ersten Mischstreckenabschnitt 22 verlassende Gemisch aus Abgas A und Reaktionsmittel R trifft auf das Umlenkelement 36 bzw. dessen Umlenkfläche 40 auf und wird entlang der durch die Umlenkfläche 40 bereitgestellten, kreisförmigen Bewegungsbahn nach radial außen und dann in Richtung zum zweiten Mischstreckenabschnitt 28 umgelenkt. Durch die näherungsweise kreisartig bzw. abgerundet geführte Umlenkfläche 40 wird somit eine allmähliche und eine Strömungsablösung weitestgehend unterbindende Umlenkung des den ersten Mischstreckenabschnitt 22 verlassenden Stroms um etwa 180° erreicht.

Hierzu zeigen die Fig. 3a) und 3b) alternative Ausgestaltungen der Mischstrecke 16 insbesondere im Umlenkbereich 26. So zeigt die Fig. 3a) eine Ausgestaltung, bei welcher die erste Ringwandung 24 in ihrem dem Umlenkbereich 26 nahe gelegenen axialen Endbereich mit einer wulstartigen Erweiterung 42 endet, so dass auch im radial inneren Strömungsbereich bei Umlenkung des den ersten Mischstreckenabschnitt 22 verlassenden Stroms das Auftreten einer Strömungsablösung von der Oberfläche der ersten Ringwandung 24 vermieden wird. Dies wird auch dadurch unterstützt, dass in ihrem dem Umlenkbereich 26 bzw. dem Umlenkelement 36 nahe liegenden Endbereich die erste Ringwandung 24 bzw. der erste Mischstreckenabschnitt 22 sich bezüglich der Längsmittenachse L erweiternd ausgebildet ist. Eine entsprechende Konfiguration zeigt auch die Fig. 3b), bei welcher die erste Ringwandung 24 in ihrem dem Umlenkbereich 26 nahe gelegenen axialen Endbereich nach radial außen erweitert ist und somit eine einen kreisartigen Strömungsweg folgende Strömung des den ersten Mischstreckenabschnitt 22 verlassenden Stroms im Umlenkbereich 26 unterstützt.

Mit dem vorangehend mit Bezug auf die Fig. 1 bis 3 beschriebenem Aufbau einer Abgas/Reaktionsmittel-Mischbaugruppe 10 werden verschiedene vorteilhafte Aspekte erzielt. Einerseits wird bei axial begrenzter Baulänge eine vergleichsweise große Strömungslänge für das mit Reaktionsmittel R durchsetzte Abgas A erreicht. Dies bedeutet, dass eine entsprechend große Oberfläche der beiden Ringwandungen 24, 30 zur Verfügung steht, welche mit Reaktionsmittel benetzt werden kann und somit die Abdampfung bzw. die thermische Zersetzung des Reaktionsmittels R effizient gewährleisten kann. Die thermische Wechselwirkung des Reaktionsmittels R mit den dessen Strömungsweg begrenzenden Bauteilen wird auch dadurch verbessert, dass die erste Ringwandung 24 nicht nur an ihrer Innenseite, sondern auch an ihrer Außenseite von dem vergleichsweise warmen Abgas umströmt wird. Dies führt dazu, dass auch im Bereich des zweiten Mischstreckenabschnitts 28 Wärme auf die erste Ringwandung 24 übertragen wird, nämlich von dem diese an ihrer Außenseite im zweiten Mischstreckenabschnitt 28 umströmenden Abgas. Somit nimmt die erste Ringwandung 24 nicht nur an ihrer dem ersten Mischstreckenabschnitt 22 zugewandten Innenoberfläche, sondern auch an ihrer dem zweiten Mischstreckenabschnitt 28 zugewandten Außenoberfläche Wärme auf, was die Erwärmung und thermische Zersetzung des Reaktionsmittels R insbesondere im ersten Mischstreckenabschnitt 22 wesentlich unterstützt. Ferner wird die Abgabe von Wärme nach außen im Wesentlichen auf die Länge des zweiten Mischstreckenabschnitts 28 bzw. der diesen nach radial außen begrenzenden zweiten Ringwandung 30 begrenzt. Nur in diesem Bereich und auch im Bereich des Umlenkbereichs 26 kann somit für die thermische Zersetzung des Reaktionsmittels R bzw. die Abdampfung von Wasser aus dem Reaktionsmittel R nicht nutzbare Verlustwärme auftreten. Um diesen Effekt zu mindern, kann, wie beispielsweise in Fig. 1 in Zuordnung zum Umlenkbereich 26 angedeutet, die Mischstrecke an ihrer Außenseite von thermisch isolierendem Material 44 überdeckt sein. Dies ist im dargestellten Beispiel beispielsweise im Bereich des Umlenkelements 36 realisiert. Es ist darauf hinzuweisen, dass im Sinne der vorliegenden Erfindung derartiges thermisch isolierendes Material ein Material ist, welches eine geringere Wärmeleitfähigkeit aufweist, als das Aufbaumaterial der umgebenen Komponente, also beispielsweise des Umlenkelements 36. Ferner kann zum Unterstützen der Abdampfung bzw. der thermischen Zersetzung des Reaktionsmittels R oder von Bestandteilen desselben eine elektrisch erregbare Heizeinrichtung 46 vorgesehen sein. Diese beispielsweise in Form einer Heizwendel oder eines Flächenheizelements an der Außenseite einer die Mischstrecke 16 nach außen begrenzenden Komponente, im dargestellten Beispiel des Umlenkelements 36, vorgesehene Heizeinrichtung 46 erwärmt den damit in thermischer Wechselwirkung stehenden Bereich der Mischstrecke 16. Dies ist insbesondere von Vorteil, wenn dies, wie dargestellt, im Bereich des Umlenkbereichs 26 erfolgt. Vor allem größere von der Reaktionsmittelabgabeanordnung 20 abtgegebene Tropfen des Reaktionsmittels R werden, getragen durch den Abgasstrom, im ersten Mischstreckenabschnitt 22 sich primär im Wesentlichen in der ersten Hauptströmungsrichtung H₁ und somit teilweise nicht in thermischer Wechselwirkung mit der Innenoberfläche der ersten Ringwandung 24 bewegen. Derartige Tröpfchen von Reaktionsmittel R treffen auf die Umlenkfläche 40 des Umlenkelements 36 auf und können dort zerplatzen und einerseits in kleinere Tröpfchen zerlegt werden bzw. einen die Umlenkfläche 40 des Mischelements 36 benetzenden Reaktionsmittelfilm bilden. Um eine verstärkte thermische Zersetzung bzw. Abdampfung in diesem Bereich zu erzielen, ist es vorteilhaft, diesen Bereich durch die zusätzliche Zufuhr von Wärme stärker zu erwärmen. Dies ist besonders dann von Vorteil, wenn mit vergleichsweise großen Dosierraten gearbeitet wird oder/und beispielsweise in einer Startphase einer Brennkraftmaschine oder bei vergleichsweise niedrigen Umgebungstemperaturen die Temperatur der verschiedenen Komponenten der Abgas/Reaktionsmittel-Mischbaugruppe 10 vergleichsweise nieder ist.

Um bei dem in Fig. 1 dargestellten Aufbau einer Abgas/Reaktionsmittel-Mischbaugruppe 10 dafür zu sorgen, dass in dem ersten Mischstreckenabschnitt 22 und dem zweiten Mischstreckenabschnitt 28 ein näherungsweise gleicher Strömungswiderstand für das darin strömende Abgas A bzw. Reaktionsmittel R besteht, kann die Strömungsquerschnittsfläche im zweiten Mischstreckenabschnitt 28 größer sein, als im ersten Mischstreckenabschnitt 28. Es wird somit dem Umstand Rechnung getragen, dass der zweite Mischstreckenabschnitt 28 sowohl nach radial außen, als auch nach radial innen durch eine Oberfläche begrenzt ist und somit eine bezüglich des ersten Mischstreckenabschnitts 22 deutlich vergrößerte und zur Erhöhung des Strömungswiderstands führende Oberfläche vorhanden ist.

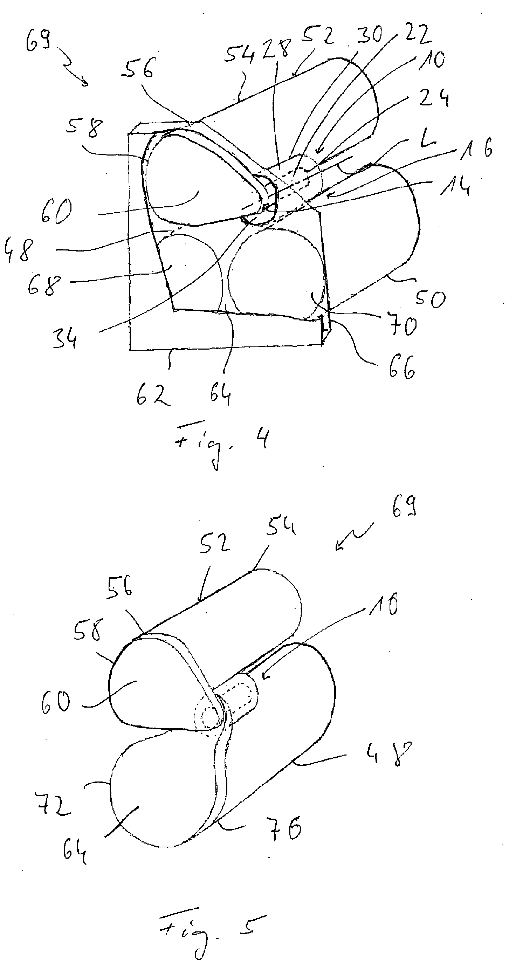

Die kompakte Bauart der Abgas/Reaktionsmittel-Mischbaugruppe 10 wird insbesondere dadurch unterstützt, dass der Eintrittsbereich 14, und der Austrittsbereich 34 des Abgasströmungskanals 12 näherungsweise im gleichen axialen Endbereich liegen. In diesem Endbereich kann dann die Anbindung an andere abgasführende bzw. Abgasbehandelnde Komponenten einer Abgasbehandlungsbaugruppe bzw. einer Abgasanlage erfolgen. Dies wird nachfolgend mit Bezug auf die Fig. 4 und 5 beschrieben.

Die Fig. 4 zeigt ein Ausgestaltungsbeispiel, bei welchem eine Abgas/Reaktionsmittel-Mischbaugruppe 10, wie sie beispielsweise vorangehend mit Bezug auf die Fig. 1 bis 3 beschrieben wurde, in Verbindung mit zwei stromabwärts bezüglich der Abgas/Reaktionsmittel-Mischanordnung angeordneten SCR-Katalysatoranordnungen 48, 50 und einer eine Oxidationskatalysatoranordnung und eine Partikelfilteranordnung umfassenden Baugruppe 52 vorgesehen ist. Diese Baugruppe 52, die beispielsweise ebenfalls in einem im Wesentlichen zylindrischen Gehäuse 54 untergebracht ist, ist stromaufwärts bezüglich der Abgas/Reaktionsmittel-Mischbaugruppe 10 angeordnet und liegt bezüglich der Längsmittenachse L näherungsweise neben bzw. sich überlappend mit der Abgas/Reaktionsmittel-Mischanordnung 10. Ein Austrittsbereich 56 der Baugruppe 52 liegt näherungsweise im gleichen axialen Bereich wie der Eintrittsbereich 14 des Abgasströmungskanals 12 der Abgas/Reaktionsmittel-Mischbaugruppe 10. Ein Abgasführungselement 58 stellt eine allgemein mit 60 bezeichnete Aufnahme-Strömungskammer bereit, in welcher das die Baugruppe 52 an deren Austrittsbereich 56 verlassende Abgas bezüglich der Längsmittenachse L nach radial innen zum Eintrittsbereich 14 des Abgasströmungskanals 12 geleitet wird. Von dort gelangt, wie vorangehend mit Bezug auf die Fig. 1 beschrieben, der Abgasstrom bereits durchsetzt mit Reaktionsmittel R in den ersten Mischstreckenabschnitt 22 und von diesem in den zweiten Mischstreckenabschnitt 28. Der Austrittsbereich 34 des Abgasströmungskanals 12 kann beispielsweise durch ein axial offenes, ringartig gestaltetes Ende des zweiten Mischstreckenabschnitts 28 gebildet sein, in welchem die Mischstrecke 16 zu einer in einem Strömungsführungsgehäuse 62 gebildeten Abgabe-Strömungskammer 64 offen ist. Die Abgas/Reaktionsmittel-Mischanordnung 10 kann, ebenso wie die Baugruppe 52 und die beiden SCR-Katalysatoranordnungen 48, 50 können an dem Strömungsführungsgehäuse 62 getragen sein. Beispielsweise kann die zweite Ringwandung 30 an eine Wandung 66 des Strömungsführungsgehäuses 62 angebunden sein.

Auch die beiden SCR-Katalysatoranordnungen 48, 50 sind zu der Abgabe-Strömungskammer 64 offen, so dass am Austrittsbereich 34 des Abgasströmungskanals 12 austretendes Abgas bezüglich der Längsmittenachse L nach radial außen umgelenkt wird und zu jeweiligen Eintrittsbereichen 68, 70 der SCR-Katalysatoranordnungen 48, 50 strömen kann.

Durch die in Fig. 4 dargestellte Anordnung mit der Abgas/Reaktionsmittel-Mischbaugruppe 10, der Baugruppe 52, den beiden SCR-Katalysatoranordnungen 48, 50, dem Abgasströmungsgehäuse 62 und dem beispielsweise im Wesentlichen in der Abgabe-Strömungskammer 64 angeordneten Strömungsführungselement 58 wird eine kompakte Anordnung der Abgasbehandlungsbaugruppe 69 erhalten.

Eine alternative Ausgestaltung ist in Fig. 5 gezeigt. Bei der in Fig. 5 dargestellten Ausgestaltung einer Abgasbehandlungsbaugruppe 68 ist neben der Abgas/Reaktionsmittel-Mischbaugruppe 10 und der Baugruppe 52 mit der Oxidationskatalysatoranordnung und der Dieselpartikelfilteranordnung nur eine einzige SCR-Katalysatoranordnung 48 vorgesehen. Die Baugruppe 52 ist über das mit Bezug auf die Fig. 4 bereits erläuterte Abgasführungselement 58 mit der darin gebildeten Aufnahme-Strömungskammer 60 an die Abgas/Reaktionsmittel-Mischanordnung 10 angebunden. Die SCR-Katalysatoranordnung 48 ist über ein entsprechendes Abgasführungselement 72 mit der darin ausgebildeten Abgabe-Strömungskammer 64 an den Austrittsbereich 34 der Mischstrecke 16 angebunden. Hier ist also eine Anordnung gewählt, bei welcher für die Strömungsführung von bzw. zu der Abgas/Reaktionsmittel-Mischbaugruppe 10 separate und nicht ineinandergeschachtelt angeordnete Abgasführungselemente vorgesehen sind.

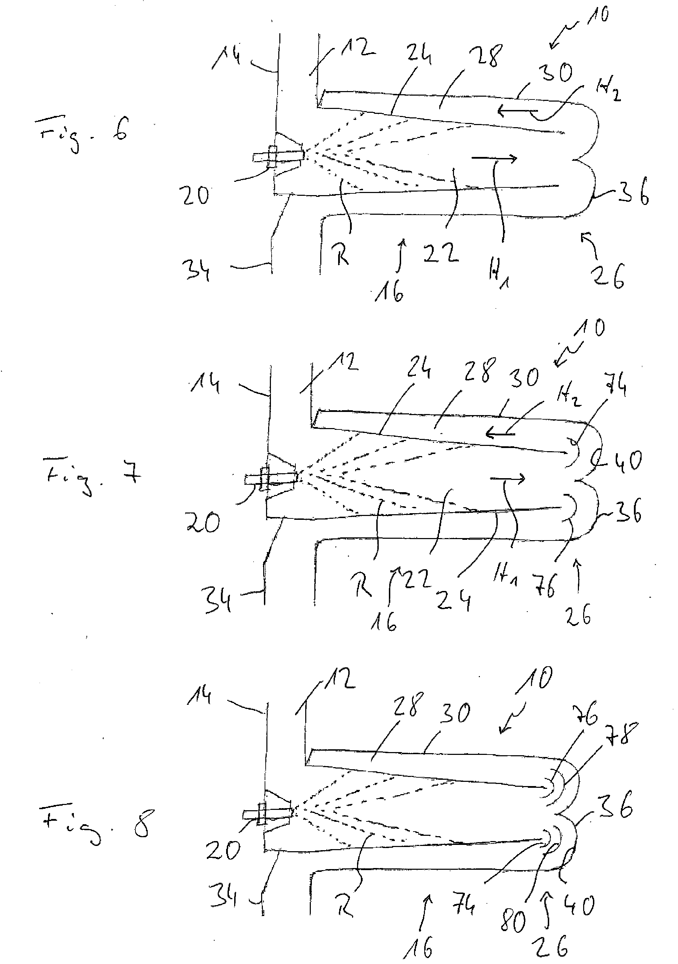

Die Fig. 6 bis 8 zeigen weitere alternative Ausgestaltungsanordnungen einer Abgas/Reaktionsmittel-Mischbaugruppe 10. Hier sind Komponenten bzw. Systembereiche, welche vorangehend beschriebenen Komponenten bzw. Systembereichen entsprechen, mit den gleichen Bezugszeichen bezeichnet.

Bei der in Fig. 6 dargestellten Ausgestaltungsart ist die dem ersten Mischstreckenabschnitt 22 nach radial außen und den zweiten Mischstreckenabschnitt 28 nach radial innen begrenzende erste Ringwandung 24 derart gestaltet, dass die Querschnittsfläche des ersten Mischstreckenabschnitts 22 in der ersten Hauptströmungsrichtung H₁ abnimmt. Beispielsweise kann die erste Ringwandung 24, abweichend von der in der Ausgestaltungsart der Fig. 1 erkennbaren zylindrischen Gestalt, eine konische Gestalt aufweisen.

Eine derartige Verjüngung der ersten Ringwandung 24 bzw. des darin gebildeten ersten Mischstreckenabschnitts 22, beispielsweise mit einem zwischen der ersten Ringwandung 28 und der Längsmittenachse L gebildeten Verjüngungswinkel im Bereich von 1° bis 5°, vorzugsweise 1° bis 3°, führt dazu, dass das aus der Reaktionsmittelabgabeanordnung 20 abgegebene Reaktionsmittel R mit einem steileren Winkel auf die Innenoberfläche der ersten Ringwandung 24 auftrifft. Dies unterstützt die Benetzung der Innenoberfläche der ersten Ringwandung 24 mit dem Reaktionsmittel R und somit die thermische Wechselwirkung des Reaktionsmittels R mit der ersten Ringwandung 24. Ferner führt der abnehmende Strömungsquerschnitt des ersten Mischstreckenabschnitts 22, welcher gleichermaßen die Abkühlung des darin strömenden Abgases kompensiert, zu einer zunehmenden Strömungsgeschwindigkeit, wodurch auch die Geschwindigkeit, mit welcher der Reaktionsmittelfilm auf der Oberfläche der ersten Ringwandung 24 bewegt wird, zunimmt und somit eine weitere Verbesserung der thermischen Wechselwirkung erzielt wird. Dieser Effekt ist besonders dann besonders effizient, wenn der Abgasstrom als Drallströmung in den ersten Mischstreckenabschnitt 22 eingeleitet wird. Eine abnehmende Querschnittsabmessung der ersten Ringwandung 24 führt aufgrund der Drehimpulserhaltung zu einer erhöhten Strömungsgeschwindigkeit des als Drallströmung sich entlang der ersten Hauptströmungsrichtung H₁ bewegenden Abgasstroms.

Man erkennt in Fig. 6 weiter, dass die den zweiten Mischstreckenabschnitt 28 nach radial außen begrenzende zweite Ringwandung 30 in einer der Ausgestaltung der Fig. 1 entsprechenden Art und Weise im Wesentlichen zylindrisch gestaltet sein kann. Dies hat zur Folge, dass auch im zweiten Mischstreckenabschnitt 28 der Strömungsquerschnitt des ringartigen Strömungsvolumens in der zweiten Hauptströmungsrichtung H₂ abnimmt und ein entsprechender Effekt erzielt werden kann, wie vorangehend mit Bezug auf die Strömung im ersten Mischstreckenabschnitt 22 erläutert.

Die Fig. 7 zeigt eine Weiterbildung der in Fig. 6 dargestellten Ausgestaltungsart, die gleichermaßen auch bei dem in Fig. 1 dargestellten Aufbau mit zylindrischer erster Ringwandung 24 vorgesehen sein kann. Im Umlenkbereich 26 ist zwischen dem axialen Ende der ersten Ringwandung 24 und dem Umlenkelement 36 ein eine ebenfalls gekrümmte Umlenkfläche 74 bereitstellendes, beispielsweise ringartiges bzw. torusartiges Leitelement vorgesehen. Dieses kann über Stege, beispielsweise am Innenumfang des Umlenkelements 36 oder/und der zweiten Ringwandung 30 getragen sein und unterstützt die Umlenkung des den ersten Mischstreckenabschnitt 22 nahe der Innenoberfläche der ersten Umfangswandung 24 verlassenden Abgasstroms in den zweiten Mischstreckenabschnitt 28. Da auch das Leitelement 76 von dem dieses umströmenden Abgasstrom erwärmt wird, stellt auch dieses eine warme und eine Verdampfung bzw. thermische Zersetzung des Reaktionsmittels unterstützende Oberfläche bereit. Ferner wird durch die gleichmäßige Umlenkung das Entstehen von Druckverlusten im Bereich des Umlenkbereichs 26 verhindert.

Bei der in Fig. 8 dargestellten Ausgestaltungsart sind zwei derartige Leitelemente 76, 78 in Richtung der Längsmittenachse L aufeinanderfolgend zwischen dem axialen Ende der ersten Ringwandung 24 und dem Umlenkelement 36 angeordnet, so dass einerseits eine weiter verbesserte Umlenkwirkung und andererseits eine weiter vergrößerte Oberfläche zur thermischen Wechselwirkung des Reaktionsmittels R bzw. von daraus generierten Bestandteilen und abgasführenden Komponenten erreicht wird. Da alle Leitelemente 76, 78, ebenso wie auch das Umlenkelement 36 jeweils eine beispielsweise kreisartig gekrümmte Umlenkfläche 74, 80, 40 bereitstellen, wird auch in demjenigen Bereich, in welchem eine Umkehr der Hauptströmungsrichtung um etwa 180° erfolgt, eine gleichmäßige Strömungsführung erreicht.

Mit dem erfindungsgemäßen Aufbau einer Abgas/Reaktionsmittel-Mischbaugruppe wird bei im Vergleich zu einer linearen Strömungsführung oder einer U-förmigen Strömungsführung deutlich verringerter Baugröße eine deutliche Vergrößerung der zur thermischen Wechselwirkung mit dem Reaktionsmittel zur Verfügung stehenden Oberfläche erreicht. So kann beispielsweise im Vergleich zu einer langgestreckten, linearen Strömungsführung bei gleicher wärmeübertragender Oberfläche das umhüllte Bauvolumen um nahezu 50% gemindert werden. In entsprechendem Ausmaß kann auch die axiale Baulänge gemindert werden. Gleichzeitig wird durch die Ineinanderschachtelung von Mischstreckenabschnitten der thermische Verlust nach außen deutlich gemindert, so dass die im Abgas transportierte Wärme wesentlich effizienter zur Verdampfung bzw. thermischen Zersetzung des Reaktionsmittels genutzt werden kann. Auch die im Inneren einer derartigen ineinandergeschachtelten Anordnung vorhandenen Strömungsverhältnisse führen zu einer deutlich effizienteren Benetzung der zur thermischen Wechselwirkung mit dem Reaktionsmittel zur Verfügung stehenden Oberfläche.

Aufgrund der auch bei kompakter Ausgestaltung vergleichsweise großen Strömungslänge in der Mischstrecke kann grundsätzlich auf das Vorsehen eines Mischers, welcher eine Mehrzahl von die Strömung ablenkenden und somit für eine Verwirbelung sorgenden Leitflächen aufweist, verzichtet werden, so dass auch die Gefahr der Entstehung von Ablagerungen im Bereich eines derartigen Mischers eliminiert kann. Sollte für eine verbesserte Durchmischung das Vorsehen eines Mischers gleichwohl vorteilhaft oder erforderlich sein, so könnte dieser beispielsweise im Inneren der Ringwandung, also im ersten Mischstreckenabschnitt untergebracht werden.

Es ist abschließend darauf hinzuweisen, dass selbstverständlich verschiedene vorangehend beschriebene Ausgestaltungsvarianten miteinander kombiniert werden können. So können selbstverständlich auch bei den in den Fig. 6 bis 8 dargestellten Ausgestaltungsvarianten die jeweiligen Umlenkbereiche thermisch isoliert oder/und in Wechselwirkung mit einer elektrisch erregbaren Heizeinrichtung stehen. Auch könnte grundsätzlich jeweils die die Mischstrecke nach radial außen begrenzende zweite Ringwandung nach außen mit thermisch isolierendem Material überdeckt sein. Die Ringwandungen bzw. die darin gebildeten Mischstreckenabschnitte weisen für eine möglichst gleichmäßige Strömungsführung vorzugsweise eine runde, beispielsweise kreisrunde, ovale oder elliptische Querschnittsgeometrie auf, unabhängig davon, ob eine zylindrische oder eine sich verjüngende Gestalt gewählt ist. Grundsätzlich können jedoch auch andere Querschnittsgeometrien, wie z. B. zumindest der bereichsweise eckige Querschnittsgeometrien, ineinandergeschachtelter Wandungen vorgesehen sein.

## Patentansprüche

1. Abgasbehandlungsbaugruppe für eine Abgasanlage einer Brennkraftmaschine, umfassend eine Abgas/Reaktionsmittel-Mischbaugruppe (10) und wenigstens eine SCR-Katalysatoranordnung (48, 50) stromabwärts der Abgas/Reaktionsmittel-Mischbaugruppe (10) und eine eine Oxidationskatalysatoranordnung oder/und eine Partikelfilteranordnung umfassende Baugruppe (52) stromaufwärts der Abgas/Reaktionsmittel-Mischbaugruppe (10), die Abgas/Reaktionsmittel-Mischbaugruppe umfassend einen Eintrittsbereich (14) eines Abgasströmungskanals (12) und eine Reaktionsmittelabgabeanordnung (20) zum Abgeben von Reaktionsmittel (R) in in dem Abgasströmungskanal (12) strömendes Abgas (A), wobei der Abgasströmungskanal (12) stromabwärts der Reaktionsmittelabgabeanordnung (20) eine Mischstrecke (16) mit einem ersten Mischstreckenabschnitt (22) umfasst, wobei im ersten Mischstreckenabschnitt (22) ein Abgas/Reaktionsmittel-Gemisch im Wesentlichen in einer ersten Hauptströmungsrichtung (H₁) in Richtung von der Reaktionsmittelabgabeanordnung (20) zu einem Umlenkbereich (26) strömt, und einen zweiten Mischstreckenabschnitt (28) umfasst, wobei der zweite Mischstreckenabschnitt (28) den ersten Mischstreckenabschnitt (22) im Wesentlichen ringartig umgibt und im zweiten Mischstreckenabschnitt (28) das Abgas/Reaktionsmittel-Gemisch in einer der ersten Hauptströmungsrichtung (H₁) im Wesentlichen entgegengesetzten zweiten Hauptströmungsrichtung (H₂) vom Umlenkbereich (26) zu einem Austrittsbereich (34) des Abgasströmungskanals (12) strömt,
wobei eine in Richtung einer Längsmittenachse (L) langgestreckte und in der ersten Hauptströmungsrichtung (H₁) sich erstreckende, den ersten Mischstreckenabschnitt (22) bezüglich der ersten Hauptströmungsrichtung (H₁) nach radial außen begrenzende und diesen vom zweiten Mischstreckenabschnitt (28) trennende rohrartige erste Ringwandung (24) und eine in der zweiten Hauptströmungsrichtung (H₂) sich erstreckende, den zweiten Mischstreckenabschnitt (28) bezüglich der zweiten Hauptströmungsrichtung (H₂) nach radial außen begrenzende zweite Ringwandung (30) vorgesehen sind,
wobei ein Eintrittsbereich (68, 70) der wenigstens einen SCR-Katalysatoranordnung (48, 50) und der Austrittsbereich (34) des Abgasströmungskanals (12) der Abgas/Reaktionsmittel-Mischbaugruppe (10) bezüglich der ersten Hauptströmungsrichtung (H₁) und der zweiten Hauptströmungsrichtung (H₂) im gleichen axialen Bereich der Mischstrecke (16) liegen,
wobei der Austrittsbereich (34) des Abgasströmungskanals (12) in eine das Abgas/Reaktionsmittel-Gemisch vom Austrittsbereich (34) des Abgasströmungskanals (12) bezüglich der zweiten Hauptströmungsrichtung (H₂) im Wesentlichen nach radial außen zum Eintrittsbereich (68, 70) der wenigstens einen SCR-Katalysatoranordnung (48, 50) leitende Abgabe-Strömungskammer (64) mündet,
wobei ein Austrittsbereich (56) der die Oxidationskatalysatoranordnung oder/und die Partikelfilteranordnung umfassenden Baugruppe (52) zu einer Aufnahme-Strömungskammer (60) offen ist und der Eintrittsbereich (14) des Abgasströmungskanals (12) zu der Aufnahme-Strömungskammer (60) offen ist,
**dadurch gekennzeichnet,**
**dass** der Eintrittsbereich (14) und der Austrittsbereich (34) des Abgasströmungskanals (12) der Abgas/Reaktionsmittel-Mischbaugruppe (10) im gleichen axialen Endbereich der Abgas/Reaktionsmittel-Mischbaugruppe (10) liegen, und
**dass** die Baugruppe (52) in einem im Wesentlichen zylindrischen Gehäuse (54) bezüglich der Längsmittenachse (L) neben und sich mit der Abgas/Reaktionsmittel-Mischeranordnung (10) überlappend liegend untergebracht ist.

2. Abgasbehandlungsbaugruppe nach Anspruch 1, **dadurch gekennzeichnet, dass** die erste Ringwandung (24) im Wesentlichen in ihrem ganzen Längserstreckungsbereich in Richtung der ersten Hauptströmungsrichtung (H₁) zylindrisch ausgebildet ist.

3. Abgasbehandlungsbaugruppe nach einem der vorangehenden Ansprüche, **dadurch gekennzeichnet, dass** die zweite Ringwandung (30) im Wesentlichen in ihrem ganzen Längserstreckungsbereich in Richtung der zweiten Hauptströmungsrichtung zylindrisch ausgebildet ist.

4. Abgasbehandlungsbaugruppe nach einem der vorangehenden Ansprüche, **dadurch gekennzeichnet, dass** der Umlenkbereich (26) ein in seinem Außenumfangsbereich an die zweite Ringwandung (28) anschließendes Umlenkelement (36) umfasst, und dass das Umlenkelement (36) eine bezüglich einer Längsmittenachse (L) vorzugsweise im Wesentlichen rotationssymmetrische, gekrümmte Umlenkfläche (40) aufweist.

5. Abgasbehandlungsbaugruppe nach einem der vorangehenden Ansprüche, **dadurch gekennzeichnet,**
**dass** im Umlenkbereich (26) wenigstens ein im Wesentlichen ringartiges, eine gekrümmte Umlenkfläche (74, 80) bereitstellendes Leitelement (76, 78) vorgesehen ist.

6. Abgasbehandlungsbaugruppe nach einem der vorangehenden Ansprüche, **dadurch gekennzeichnet, dass** die erste Ringwandung (24) in ihrem dem Umlenkbereich (26) nahen Endbereich wulstartig erweitert ist.

7. Abgasbehandlungsbaugruppe nach einem der vorangehenden Ansprüche, **dadurch gekennzeichnet,**
**dass** der Eintrittsbereich (14) und der Austrittsbereich (34) des Abgasströmungskanals (12) bezüglich der ersten Hauptströmungsrichtung (H₁) und der zweiten Hauptströmungsrichtung (H₂) im Wesentlichen im gleichen axialen Bereich der Mischstrecke (16) angeordnet sind.

8. Abgasbehandlungsbaugruppe nach einem der vorangehenden Ansprüche, **dadurch gekennzeichnet, dass** die Eintrittsbereiche (68, 70) von wenigstens zwei SCR-Katalysatoranordnungen (48, 50) zur Abgabe-Strömungskammer (64) offen sind.

9. Abgasbehandlungsbaugruppe nach einem der vorangehenden Ansprüche, **dadurch gekennzeichnet, dass** Abgas in der Aufnahme-Strömungskammer (60) bezüglich der ersten Hauptströmungsrichtung (H₁) nach radial innen strömt.

10. Abgasbehandlungsbaugruppe nach einem der vorangehenden Ansprüche, **dadurch gekennzeichnet, dass** die Aufnahme-Strömungskammer (60) und die Abgabe-Strömungskammer (64) bezüglich der ersten Hauptströmungsrichtung (H₁) und der zweiten Hauptströmungsrichtung (H₂) im gleichen axialen Bereich der Mischstrecke (16) angeordnet sind.

## Claims

1. Exhaust gas treatment assembly unit for an exhaust system of an internal combustion engine, comprising an exhaust gas/reactant mixing assembly unit (10) and at least one SCR catalytic converter unit (48, 50) downstream of the exhaust gas/reactant mixing assembly unit (10) and an assembly unit (52) comprising an oxidation catalytic converter unit or/and a particle filter device upstream of the exhaust gas/reactant mixing assembly unit (10), said exhaust gas/reactant mixing assembly unit comprising an inlet area (14) of an exhaust gas flow duct (12) and a reactant release device (20) for releasing reactant (R) into exhaust gas (A) flowing in the exhaust gas flow duct (12), wherein the exhaust gas flow duct (12) comprises a mixing section (16) with a first mixing section segment (22) downstream of the reactant release device (20), wherein an exhaust gas/reactant mixture flows in the first mixing section segment (22) essentially in a first main flow direction (H₁) in the direction from the reactant release device (20) to a deflection area (26), and a second mixing section segment (28), wherein the second mixing section segment (28) surrounds the first mixing section segment (22) in an essentially ring-shaped manner, and the exhaust gas/reactant mixture flows in the second mixing section segment (28) in a second main flow direction (H₂) essentially opposed to the first main flow direction (H₁) from the deflection area (26) to an outlet area (34) of the exhaust gas flow duct (12),
wherein a tubular first ring wall (24) is provided, elongated in the direction of a longitudinal central axis (L), extending in the first main flow direction (H₁) and defining the first mixing section segment (22) radially outwardly in relation to the first main flow direction (H₁) and separating this mixing section segment from the second mixing section segment (28), and wherein a second ring wall (30) is provided, extending in the second main flow direction (H₂) and defining the second mixing section segment (28) radially outwardly in relation to the second main flow direction (H₂),
wherein an inlet area (68, 70) of the at least one SCR catalytic converter unit (48, 50) and the outlet area (34) of the exhaust gas flow duct (12) of the exhaust gas/reactant mixing assembly unit (10) are located in the same axial area of the mixing section (16) in relation to the first main flow direction (H₁) and to the second main flow direction (H₂),
wherein the outlet area (34) of the exhaust gas flow duct (12) opens into a releasing flow chamber (64) guiding the exhaust gas/reactant mixture from the outlet area (34) of the exhaust gas flow duct (12) essentially radially outwardly to the inlet area (68, 70) of the at least one SCR catalytic converter unit (48, 50) in relation to the second main flow direction (H₂),
wherein an outlet area (56) of the assembly unit (52) comprising the oxidation catalytic converter unit or/and the particle filter device is open towards a receiving flow chamber (60), and the inlet area (14) of the exhaust gas flow duct (12) is open towards the receiving flow chamber (60),
**characterized in that**
the inlet area (14) and the outlet area (34) of the exhaust gas flow duct (12) of the exhaust gas/reactant mixing assembly unit (10) are arranged essentially in the same axial end area of the exhaust gas/reactant mixing assembly unit (10), and
that the assembly unit (52) is received in an essentially cylindrical housing (54) adjacent to the exhaust gas/reactant mixing assembly unit (10) in relation to a central longitudinal axis (L) and overlapping the latter.

2. Exhaust gas treatment assembly unit in accordance with claim 1, **characterized in that** the first ring wall (24) has an essentially cylindrical configuration essentially in the entire area of its longitudinal extension in the direction of the first main flow direction (H₁).

3. Exhaust gas treatment assembly unit in accordance with one of the preceding claims, **characterized in that** the second ring wall (30) has an essentially cylindrical configuration essentially in the entire area of its longitudinal extension in the direction of the second main flow direction.

4. Exhaust gas treatment assembly unit in accordance with one of the preceding claims, **characterized in that** the deflection area (26) comprises a deflecting element (36) adjoining the second ring wall (28) in its outer circumferential area and **in that** the deflecting element (36) has a preferably essentially rotationally symmetrical, curved deflecting surface (40) in relation to a central longitudinal axis (L).

5. Exhaust gas treatment assembly unit in accordance with one of the preceding claims, **characterized in that**
at least one essentially ring-shaped guide element (76, 78) forming a curved deflecting surface (74, 80) is provided in the deflection area (26).

6. Exhaust gas treatment assembly unit in accordance with one of the preceding claims, **characterized in that** the first ring wall (24) is expanded in a bead-like manner in its end area located close to the deflection area (26).

7. Exhaust gas treatment assembly unit in accordance with one of the preceding claims, **characterized in that** the inlet area (14) and the outlet area (34) of the exhaust gas flow duct (12) are arranged essentially in the same axial area of the mixing section (16) in relation to the first main flow direction (H₁) and to the second main flow direction (H₂).

8. Exhaust gas treatment assembly unit in accordance with one of the preceding claims, **characterized in that** the inlet areas (68, 70) of at least two SCR catalytic converter units (48, 50) are open towards the releasing flow chamber (64).

9. Exhaust gas treatment assembly unit in accordance with one of the preceding claims, **characterized in that** exhaust gas flows in the receiving flow chamber (60) radially inwardly in relation to the first main flow direction (H₁).

10. Exhaust gas treatment assembly unit in accordance with one of the preceding claims, **characterized in that** the receiving flow chamber (60) and the releasing flow chamber (64) are arranged in the same axial area of the mixing section (16) in relation to the first main flow direction (H₁) and the second main flow direction (H₂).

## Revendications

1. Module de traitement de gaz d'échappement pour un système d'échappement d'un moteur à combustion interne, comprenant un module de mélange de gaz d'échappement/réactif (10) et au moins un module de catalyseur SCR (48, 50) en aval du module de mélange de gaz d'échappement/réactif (10) et un module (52) comprenant un module de catalyseur d'oxydation et/ou un dispositif de filtre à particules en amont du module de mélange de gaz d'échappement/réactif (10), ledit module de mélange de gaz d'échappement/réactif comprenant une zone d'entrée (14) d'un canal d'écoulement de gaz d'échappement (12) et un agencement de libération de réactif (20) pour libérer le réactif (R) dans le gaz d'échappement (A) s'écoulant dans le canal d'écoulement de gaz d'échappement (12), dans lequel le canal d'écoulement de gaz d'échappement (12) comprend une section de mélange (16) avec un premier segment de section de mélange (22) en aval de l'agencement de libération de réactif (20), dans lequel un mélange de gaz d'échappement/réactif s'écoule dans le premier segment de section de mélange (22) essentiellement dans une première direction d'écoulement principale (H₁) dans la direction allant de l'agencement de libération de réactif (20) à une zone de déviation (26), et un deuxième segment de section de mélange (28), dans lequel le deuxième segment de section de mélange (28) entoure le premier segment de section de mélange (22) de manière essentiellement annulaire, et le mélange de gaz d'échappement/réactif s'écoule dans le deuxième segment de section de mélange (28) dans une deuxième direction d'écoulement principale (H₂) essentiellement opposée à la première direction d'écoulement principale (H₁) depuis la zone de déviation (26) vers une zone de sortie (34) du canal d'écoulement de gaz d'échappement (12),
dans lequel il est prévu une première paroi annulaire (24) tubulaire qui est allongée dans la direction d'un axe central longitudinal (L), et s'étend dans la première direction d'écoulement principale (H₁) et qui définit le premier segment de section de mélange (22) radialement vers l'extérieur par rapport à la première direction d'écoulement principale (H₁) et qui sépare ce segment de section de mélange du deuxième segment de section de mélange (28), et dans lequel il est prévu une deuxième paroi annulaire (30) qui s'étend dans la deuxième direction d'écoulement principale (H₂) et qui définit le deuxième segment de section de mélange (28) radialement vers l'extérieur par rapport à la deuxième direction d'écoulement principale (H₂),
dans lequel une zone d'entrée (68, 70) dudit au moins un module de catalyseur SCR (48, 50) et la zone de sortie (34) du canal d'écoulement de gaz d'échappement (12) du module de mélange de gaz d'échappement/réactif (10) sont situées dans la même zone axiale de la section de mélange (16) par rapport à la première direction d'écoulement principale (H₁) et à la deuxième direction d'écoulement principale (H₂), dans lequel la zone de sortie (34) du canal d'écoulement de gaz d'échappement (12) débouche dans une chambre d'écoulement de libération (64) guidant le mélange de gaz d'échappement/réactif depuis la zone de sortie (34) du canal d'écoulement de gaz d'échappement (12) essentiellement radialement vers l'extérieur jusqu'à la zone d'entrée (68, 70) dudit au moins un module de catalyseur SCR (48, 50) par rapport à la deuxième direction d'écoulement principale (H₂),
dans lequel une zone de sortie (56) du module (52) comprenant le module de catalyseur d'oxydation et/ou le dispositif de filtre à particules est ouverte vers une chambre d'écoulement de réception (60), et la zone d'entrée (14) du canal d'écoulement de gaz d'échappement (12) est ouverte vers la chambre d'écoulement de réception (60),
**caractérisé en ce que**
la zone d'entrée (14) et la zone de sortie (34) du canal d'écoulement de gaz d'échappement (12) du module de mélange de gaz d'échappement/réactif (10) sont disposées essentiellement dans la même zone d'extrémité axiale du module de mélange de gaz d'échappement/réactif (10), et
que le module (52) est reçue dans un boîtier essentiellement cylindrique (54) adjacent au module d'assemblage (10) du mélange de gaz d'échappement/réactif par rapport à un axe longitudinal central (L) et chevauchant ce dernier.

2. Module de traitement de gaz d'échappement selon la revendication 1, **caractérisée en ce que** la première paroi annulaire (24) présente une configuration cylindrique essentiellement sur toute la surface de son extension longitudinale dans la direction de la première direction d'écoulement principale (H₁).

3. Module de traitement de gaz d'échappement selon l'une des revendications précédentes, **caractérisée en ce que** la deuxième paroi annulaire (30) présente une configuration cylindrique essentiellement dans toute la zone de son extension longitudinale dans le sens de la deuxième direction d'écoulement principale.

4. Module de traitement de gaz d'échappement selon l'une des revendications précédentes, **caractérisée en ce que** la zone de déviation (26) comprend un élément de déviation (36) se raccordant à la deuxième paroi annulaire (28) dans sa zone circonférentielle extérieure et **en ce que** l'élément de déviation (36) présente une surface de déviation (40) incurvée, de préférence essentiellement symétrique en rotation par rapport à un axe longitudinal central (L).

5. Module de traitement de gaz d'échappement selon l'une des revendications précédentes, **caractérisée en ce que**
au moins un élément de guidage essentiellement annulaire (76, 78) formant une surface de déviation incurvée (74, 80) est prévu dans la zone de déviation (26).

6. Module de traitement de gaz d'échappement selon l'une des revendications précédentes, **caractérisée en ce que** la première paroi annulaire (24) est élargie à la manière d'un bourrelet dans sa zone d'extrémité située à proximité de la zone de déviation (26).

7. Module de traitement de gaz d'échappement selon l'une des revendications ci-dessus, **caractérisée en ce que** la zone d'entrée (14) et la zone de sortie (34) du canal d'écoulement de gaz d'échappement (12) sont disposées essentiellement dans la même zone axiale de la section de mélange (16) par rapport à la première direction d'écoulement principale (H₁) et à la deuxième direction d'écoulement principale (H₂).

8. Module de traitement de gaz d'échappement selon l'une des revendications précédentes, **caractérisée en ce que** les zones d'entrée (68, 70) d'au moins deux modules de catalyseur SCR (48, 50) sont ouvertes en direction de la chambre d'écoulement de sortie (64).

9. Module de traitement de gaz d'échappement selon l'une des revendications précédentes, **caractérisée en ce que** les gaz d'échappement s'écoulent dans la chambre d'écoulement de réception (60) radialement vers l'intérieur par rapport à la première direction d'écoulement principale (H₁).

10. Module de traitement de gaz d'échappement selon l'une des revendications précédentes, **caractérisée en ce que** la chambre d'écoulement de réception (60) et la chambre d'écoulement de libération (64) sont disposées dans la même zone axiale de la section de mélange (16) par rapport à la première direction d'écoulement principale (H₁) et à la deuxième direction d'écoulement principale (H₂).
